# EUROPÄISCHE PATENTANMELDUNG

(11) **EP 2 141 386 A1**
(43) Veröffentlichungstag der Anmeldung: **06.01.2010**
(21) Anmeldenummer: 09159730.2
(22) Anmeldetag: 08.05.2009
(51) Int. Cl.: F16H 37/04, F16H 61/04

(54) **Mehrgruppengetriebe eines Kraftfahrzeuges**

(30) Priorität: 30.06.2008 DE 102008002750
(71) Anmelder: ZF Friedrichshafen AG, 88038 Friedrichshafen (DE)
(72) Erfinder: Dittrich, Alan, 78464, Konstanz (DE); Hoffmann, Rayk, 88048, Friedrichshafen (DE)

(57) **Zusammenfassung**

Die Erfindung betrifft ein Mehrgruppengetriebe eines Kraftfahrzeuges und ein Verfahren zu dessen Betrieb, mit mindestens zwei Getriebegruppen (3',3",4), wobei eine als Planetengetriebe ausgebildete Bereichsgruppe (4) einer als Zahnradgetriebe ausgebildeten Hauptgruppe (3',3") nachgeschaltet ist, wobei eine Hauptgruppenausgangswelle (30) mit einem Sonnenrad (34) und eine Getriebeabtriebswelle (36) mit einem Planetenträger (33) der Bereichsgruppe (4) verbunden ist, mit einem Anfahrelement (7), über das ein Antriebsmotor (5) mit einer Getriebeeingangswelle (17) verbindbar ist, und mit einem in die Bereichsgruppe (4) integrierten, als Reibungskupplung ausgebildeten Lastschaltmittel (16), zum Schalten eines zugkraftunterstützenden Direktgangs als Zwischengang bei einem Gangwechsel, über das die Getriebeeingangswelle (17) mit der Getriebeabtriebswelle (36) verbindbar ist, wobei ein Eingangsteil (40) des Lastschaltmittels (16) mit der Getriebeeingangswelle (17) und ein Ausgangsteil (41) des Lastschaltmittels (16) mit dem Planetenträger (33) verbunden ist. Zusätzlich zu dem Lastschaltmittel (16) zum Schalten eines Zwischenganges ist mindestens eine Lastschalteinrichtung (42,48,54,59,61,63) zum Schalten mindestens eines Ganges (i₁,i₂,i₃) der Hauptgruppe (3',3") und/oder mindestens einer der Hauptgruppe (3',3") vorgeschalteten Gangkonstanten (iₖ₁,iₖ₂) vorgesehen, die Schaltvorgänge zumindest unter Teillast erlaubt.

## Beschreibung

Die Erfindung betrifft ein Mehrgruppengetriebe eines Kraftfahrzeuges und ein Verfahren zum Betrieb eines Mehrgruppengetriebes eines Kraftfahrzeuges gemäß dem Oberbegriff des Patentanspruchs 1 und dem Oberbegriff des Patentanspruchs 12.

Mehrgruppengetriebe bestehen aus zwei oder mehr meist seriell angeordneten Getriebegruppen, durch deren Kombination eine hohe Gangzahl realisierbar ist. Zunehmend werden sie als automatisierte Schaltgetriebe, beispielsweise bestehend aus einer Eingangsgruppe, einer Hauptgruppe und einer Nachschaltgruppe, konzipiert. Derartige Getriebe finden insbesondere in Nutzfahrzeugen Anwendung, da sie eine besonders feine Gangabstufung mit beispielsweise 12 oder 16 Gängen bieten und einen hohen Wirkungsgrad aufweisen. Bei einer geringeren Gangzahl sind auch Konfigurationen lediglich aus einer Hauptgruppe und einer Eingangsgruppe oder einer Hauptgruppe und einer Nachschaltgruppe möglich. Zudem zeichnen sie sich im Vergleich zu manuellen Schaltgetrieben durch einen hohen Bedienungskomfort aus und sind im Vergleich zu Automatgetrieben besonders wirtschaftlich in den Herstellungs- und Betriebskosten.

Bauartbedingt unterliegen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kupplung unterbrochen wird, um den eingelegten Gang lastfrei auszulegen, in einer Neutralstellung Getriebe und Antriebsmotor auf eine Anschlussdrehzahl zu synchronisieren und den Zielgang einzulegen. Durch das zugkraftunterbrochene Rollen des Fahrzeuges können unerwünschte Geschwindigkeitserhöhungen oder Geschwindigkeitsverluste auftreten. Zudem kann ein erhöhter Kraftstoffverbrauch entstehen. Während sich die Zugkraftunterbrechungen bei Personenkraftfahrzeugen durch Einbußen der Fahrdynamik in der Regel eher nur störend auswirken, beispielsweise bei einer sportlich orientierten Fahrweise beim Hochschalten, kann sich bei schweren oder mittleren Nutzfahrzeugen die Fahrgeschwindigkeit derart verzögern, dass ein angewählter Gangwechsel unmöglich wird und es an Steigungen zu unerwünschten und wiederholten Rückschaltvorgängen, Kriechfahrten oder sogar zu zusätzlichen Anfahrvorgängen kommt.

Aus der DE 10 2006 024 370 A1 der Anmelderin ist ein automatisiertes Gruppen-Schaltgetriebe eines Kraftfahrzeuges mit Zugkraftunterstützung beim Gangwechsel bekannt. Das Getriebe umfasst eine Splittergruppe mit einer Getriebeeingangswelle als Eingangs- oder Vorschaltgetriebe, ein Hauptgetriebe mit einer Getriebehauptwelle als Grundgetriebe und eine Bereichsgruppe mit einer ausgangsseitigen Getriebeabtriebswelle als Ausgangs- oder Nachschaltgetriebe. Der Antriebsmotor ist in herkömmlicher Weise über ein Anfahrelement mit der Getriebeeingangswelle verbindbar. Die Bauweise des bekannten Mehrgruppengetriebes mit Eingangsgetriebe und Hauptgetriebe ermöglicht die Schaltung eines Direktganges als ein Zwischengang während eines Gangwechsels. Dazu wird mittels einer als Reibungskupplung ausgebildeten Lastschaltkupplung temporär eine direkte Verbindung der Getriebeeingangswelle mit der Getriebehauptwelle hergestellt, die ihrerseits mit der Getriebeabtriebswelle wirkverbunden ist. Dadurch werden das Hauptgetriebe und die Splittergruppe lastfrei, so dass der eingelegte Gang ausgelegt, das Getriebe synchronisiert und der Zielgang eingelegt werden kann, ohne dass die Anfahrkupplung bei dem Gangwechsel geöffnet werden muss. Die Lastschaltkupplung überträgt dabei ein Motordrehmoment auf den Getriebeausgang, wobei ein freiwerdendes dynamisches Moment bei der Drehzahlanpassung zwischen Ursprungsgang und Zielgang genutzt wird, um den Zugkrafteinbruch weitgehend zu kompensieren. Die als Zwischengangkupplung fungierende Lastschaltkupplung kann zwischen dem Eingangsgetriebe und dem Hauptgetriebe oder zwischen der Anfahrkupplung und dem Eingangsgetriebe angeordnet sein. Ein Umschalten der nachgeschalteten Bereichsgruppe zwischen einem unteren Gangbereich und einem oberen Gangbereich während eines Gangwechsels ist jedoch nicht ohne weiteres zugkraftunterstützt.

Die DE 10 2005 046 894 A1 der Anmelderin zeigt ein Mehrgruppengetriebe eines Kraftfahrzeuges mit einer Hauptgruppe und einer nachgeschalteten Bereichsgruppe, bei dem eine als Reibungskupplung ausgebildete Lastschaltkupplung zur Zugkraftunterstützung bei einem Gangwechsel innerhalb der Bereichsgruppe angeordnet ist. Die Bereichsgruppe ist als ein Planetengetriebe ausgebildet, dessen Sonnenrad mit einer Ausgangswelle der Hauptgruppe verbunden ist, und dessen Planetenträger mit einer Getriebeabtriebswelle am Getriebeausgang verbunden ist. Eine Getriebeeingangswelle ist über eine Anfahrkupplung mit dem Antriebsmotor des Fahrzeugs verbindbar. Die Getriebeeingangswelle ist durch die Hauptgruppe bis zum Bereichsgetriebe verlängert und an ihrem Ende mit der Eingangsseite der Lastschaltkupplung verbunden. Die Ausgangsseite der Lastschaltkupplung kann entweder über die Ausgangswelle der Hauptgruppe mit dem Sonnenrad verbunden sein oder über den Planetenträger direkt mit der Getriebeabtriebswelle gekoppelt sein. Über die Lastschaltkupplung ist eine steuerbare Direktverbindung zwischen der Getriebeeingangswelle und der Getriebeabtriebswelle herstellbar, die bei einem Gangwechsel eingesetzt wird, um, in vergleichbarer Weise zur DE 10 2006 024 370 A1, das Hauptgetriebe zu entlasten und den Gangwechsel bei geschlossenem Anfahrelement ohne Zugkraftunterbrechung durchzuführen. Während bei der ersten Version der Kraftfluss im Zwischengang zunächst über die Bereichsgruppe verzweigt, hat die zweite Version, bei der die Ausgangsseite der Lastschaltkupplung direkt mit dem Planetenträger und damit mit dem Getriebeabtrieb verbunden ist, den Vorteil, dass auch Schaltvorgänge, die eine Bereichsumschaltung der Bereichsgruppe beinhalten, zugkraftunterstützt sind.

Die in den beiden genannten Druckschriften offenbarten Mehrgruppengetriebe sind in der Lage, die ihnen zugrunde liegenden Aufgaben in vollem Umfang zu erfüllen und zugkraftunterstütze Gangwechsel zu ermöglichen. Gleichwohl ist es wünschenswert, dass die Dynamik beim Gangwechsel derartiger automatisierter Gruppengetriebe noch gesteigert wird.

Vor diesem Hintergrund liegt der Erfindung die Aufgabe zugrunde, ein Mehrgruppengetriebe mit Zwischengangschaltung und ein Verfahren zu dessen Betrieb anzugeben, die insbesondere hinsichtlich der Effizienz der Zugkraftunterstützung beim Gangwechsel verbessert sind sowie einen möglichst hohen Schaltkomfort erreichen.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass bei einem automatisierten Mehrgruppen-Schaltgetriebe mit Zugkraftunterstützung bei Zughoch- und Zugrückschaltungen eine Zwischengangschaltung durch zusätzliche lastschaltbare Gangschaltelemente, die es erlauben eine Ansteuerung des Gangwechsels schon bei einer annähernden Drehzahlgleichheit der beteiligten Schaltpartner einzuleiten, zeitlich verkürzt werden kann.

Demnach geht die Erfindung aus von einem Mehrgruppengetriebe eines Kraftfahrzeuges, mit mindestens zwei Getriebegruppen, wobei eine als Planetengetriebe ausgebildete Bereichsgruppe einer als Zahnradgetriebe ausgebildeten Hauptgruppe nachgeschaltet ist, wobei eine Hauptgruppenausgangswelle mit einem Sonnenrad und eine Getriebeabtriebswelle mit einem Planetenträger der Bereichsgruppe verbunden ist, mit einem Anfahrelement, über das ein Antriebsmotor mit einer Getriebeeingangswelle verbindbar ist, und mit einem in die Bereichsgruppe integrierten, als Reibungskupplung ausgebildeten Lastschaltmittel zum Schalten eines zugkraftunterstützenden Direktgangs als Zwischengang bei einem Gangwechsel, über das die Getriebeeingangswelle mit der Getriebeabtriebswelle verbindbar ist, wobei ein Eingangsteil des Lastschaltmittels mit der Getriebeeingangswelle und ein Ausgangsteil des Lastschaltmittels mit dem Planeteriträger verbunden ist.

Zur Lösung der gestellten Aufgabe sieht die Erfindung zudem vor, dass zusätzlich zu dem Lastschaltmittel zum Schalten eines Zwischenganges mindestens eine Lastschalteinrichtung zum Schalten mindestens eines Ganges der Hauptgruppe und/oder mindestens einer der Hauptgruppe vorgeschalteten Gangkonstanten vorgesehen ist, die Schaltvorgänge zumindest unter Teillast erlaubt.

Unter einem Gangwechsel wird ein Schaltvorgang verstanden, bei dem ein Ursprungsgang ausgelegt und ein Zielgang eingelegt wird, wobei auch der Spezialfall eingeschlossen ist, dass der Zielgang dem Ursprungsgang entspricht, also keine Übersetzungsänderung erfolgt. Weiterhin werden bei den einzelnen Getriebegruppen eine vorgeschaltete Splittergruppe auch als Splittergetriebe, eine Hauptgruppe auch als Hauptgetriebe und eine nachgeschaltete Bereichsgruppe auch als Bereichsgetriebe bezeichnet.

Zudem geht die Erfindung aus von einem Verfahren zum Betrieb eines Mehrgruppengetriebes eines Kraftfahrzeuges, bei dem bei einem Gangwechsel zugkraftunterstützende Mittel aktiviert werden. Die gestellte Aufgabe bezüglich des Verfahrens wird dadurch gelöst, dass über ein als Reibungskupplung wirksames Lastschaltmittel ein Zwischengang geschaltet wird, bei dem eine Verbindung zwischen einer Getriebeeingangswelle und einer Getriebeabtriebswelle hergestellt wird, wobei ein Anfahrelement zumindest teilweise geschlossenen ist und das Lastschaltmittel im zumindest schlupfenden Zustand ein Drehmoment eines Antriebsmotors an der Getriebeabtriebswelle abstützt, während die Drehzahl des Antriebsmotors an eine Synchrondrehzahl eines Zielganges angepasst wird, wobei mit Hilfe wenigstens einer, zumindest unter Teillast schaltbaren Lastschalteinrichtung zum Schalten eines Ursprungsganges und/oder eines Zielganges bereits bei annähernd erreichter Lastfreiheit und/oder bei annähernd erreichter Synchrondrehzahl der Ursprungsgang ausgelegt und/oder der Zielgang eingelegt wird.

Bei einer bevorzugten Ausführungsform der Erfindung ist außer der Hauptgruppe und der nachgeschalteten Bereichsgruppe eine vorgeschaltete Splittergruppe vorgesehen, so dass insgesamt drei Getriebegruppen im Kraftfluss hintereinander angeordnet sind, wobei die Splittergruppe mit zwei Gangkonstanten und die Hauptgruppe mit mindestens drei Gangstufen als Vorgelegewellengetriebe mit mindestens einer gemeinsamen Vorgelegewelle ausgebildet sind. Ein solches Getriebe ist aufgrund seiner feinen Gangabstufung und seines hohen Schaltkomforts besonders vorteilhaft in Nutzfahrzeugen einsetzbar. Vorzugsweise wird ein derartiges Getriebe mit zwei parallel zur Getriebeeingangswelle gelagerten Vorgelegewellen konzipiert sein, über die sich die Leistung der Splittergruppe und der Hauptgruppe verzweigt, wobei bei jedem Radsatz ein koaxial zur Getriebeeingangswelle gelagertes Losrad mit jeweils einem auf den Vorgelegewellen sitzenden zugehörigen Festrad im Eingriff steht. Die Erfindung ist aber ebenso vorteilhaft bei Vorgelegewellengetrieben mit nur einer Vorgelegewelle oder anderen Gruppengetrieben anwendbar.

Bei einem solchen Getriebe ergibt sich mit einem dreigängigem Grundgetriebe eine Anzahl von n = n_{GV} x n_{HG} x n_{GP} = 2 x 3 x 2 = 12 Vorwärtsgängen. Bei einem viergängigen Grundgetriebe wären entsprechend 16 Vorwärtsgänge möglich. Eine zugehörige Schaltabfolge kann beispielsweise vorsehen, dass zunächst über die Gangkonstanten des Splittergetriebes die Gangstufen der Hauptgruppe alternierend variiert und mit einer Übersetzung des Bereichsgetriebes multipliziert werden. Nach einer Bereichsumschaltung kann die gleiche Variation ohne Planetenübersetzung wiederholt werden.

Die Getriebeeingangswelle ist bei der Anordnung durch die Getriebegruppen bis zum Eingang der Bereichsgruppe verlängert, wobei eine Ausgangswelle des Hauptgetriebes, auf der die erfindungsgemäß als Lastschalteinrichtungen ausgebildeten Schalteinrichtungen der Gänge des Hauptgetriebes sitzen und die an ihrem Ende das Sonnenrad der Bereichsgruppe trägt, als eine äußere Hohlwelle ausgebildet sein kann, durch die die Getriebeeingangswelle als innere Welle koaxial hindurchgeführt ist. Die Getriebeeingangswelle ist an ihrem Ende mit einer Eingangsseite der Zwischengangkupplung verbunden. Eine Ausgangsseite der Zwischengangkupplung ist mit dem Planetenträger verbunden.

Die Zwischengangkupplung kann bauraumsparend innerhalb des Planetenträgers koaxial hinter dem Sonnenrad positioniert werden, so dass lediglich dieser Bereich konstruktiv zur Aufnahme der Zwischengangkupplung anzupassen ist. Als Zwischengangkupplung ist eine ansteuerbare Reibungskupplung vorgesehen, die grundsätzlich in Ein- oder Mehrscheibenbauweise ausgebildet sein kann. Besonders vorteilhaft ist beispielsweise eine nasse Lamellenkupplung als Zwischerigangkupplung geeignet.

Der Zwischengang ist durch die Anordnung der Zwischengangkupplung am Getriebeabtrieb unabhängig von der aktuellen Gangbereichsstellung der Bereichsgruppe als Direktgang des Gesamtgetriebes ausgelegt, da der Antriebsmotor über die Zwischengangkupplung direkt mit der Getriebeabtriebswelle verbindbar ist. Folglich ist auch eine Bereichsumschaltung während eines Gangwechsels mit Zwischengangschaltung automatisch zugkraftunterstützt.

Während schon durch die Zwischengangschaltung an sich bei allen Zugschaltungen eine signifikante Verringerung des Geschwindigkeitsverlustes und im Vergleich zu herkömmlichen zugkraftunterbrochenen Gangwechseln kürzere Schaltzeiten und somit im Ergebnis eine Fahrleistungssteigerung erreicht sowie der Schalt- und Fahrkomfort erhöht werden, lassen sich mit Hilfe lastschaltbarer Schaltelemente in Lastschalteinrichtungen an den Radsätzen die zugkraftunterstützten Gangwechsel zeitlich weiter verkürzen, wodurch sich die Fahrleistung und der Schalt- bzw. Fahrkomfort noch weiter erhöht. Da sich auch der Schlupfbetrieb im Zwischengang im zeitlichen Mittel verringert, unterliegt die Zwischengangkupplung zudem einer geringeren Verschleißbelastung, was sich bei der Auslegung der Zwischengangkupplung kostengünstig auswirkt und die Lebensdauer der Kupplung erhöht.

Weiterhin können über den Zwischengang die zu synchronisierenden rotierenden Massen abgebremst werden, wodurch die üblicherweise zur Abbremsung der Massen bei Hochschaltvorgängen vorgesehene Getriebebremse entbehrlich wird, wodurch weitere Kosten, sowie Einbauraum und Gewicht eingespart bzw. reduziert werden können. Zudem werden Schwingungen und Schaltschläge effektiv verringert, da der Antriebsstrang während des Gangwechsels durch den Zwischengang stets vorgespannt bleibt, wodurch eine zusätzliche Erhöhung des Schaltkomforts erreicht wird.

Die Funktionsweise der Zugkraftunterstützung mit Zwischengang ist wie folgt:
Durch das Zuschalten des Zwischengangs bei einem Gangwechsel werden die Hauptgruppe und die Splittergruppe im Kraftfluss entlastet und somit schaltbar, wobei die Anfahrkupplung während des Schaltvorgangs vorzugsweise vollständig geschlossen bleibt, um eine möglichst effektive Zugkrafterhaltung zu gewährleisten. Über die in die Bereichsgruppe integrierte Reibungskupplung ist der Zwischengang als Direktgang des Gesamtgetriebes, d.h. als eine Direktverbindung zwischen Getriebeeingangswelle und Getriebeabtriebswelle schaltbar. Die Reibungskupplung stützt dabei im schlupfenden Zustand das Motordrehmoment während der Zughoch- oder Zugrückschaltung am Abtrieb bzw. den angetriebenen Fahrzeugrädern ab, während die Motordrehzahl dem Zielgang angepasst wird. Ein bei der Drehzahlanpassung des Motors frei werdendes Drehmoment ist somit zur Zugkrafterhaltung nutzbar. Der Zwischengang wird zum Abschließen des Gangwechsels wieder geöffnet. Grundsätzlich sind bei einem solchen Gangwechsel - insbesondere im Gegensatz zu bekannten Doppelkupplungsgetrieben - auch zugkraftunterstützte Gangsprünge über zwei oder mehr Gangstufen möglich.

Bei einem derartigen zugkraftunterstützten Gangwechsel eines automatisierten Schaltgetriebes kann ohne weitere Maßnahmen das Hauptgetriebe bzw. das Splittergetriebe erst dann in deren Neutralstellung gebracht und der Zielgang erst dann eingelegt werden, wenn sich eine zumindest nahezu vollständige Lastfreiheit der zu schaltenden Getriebegruppen eingestellt hat und Motor sowie Getriebe auf eine Anschlussdrehzahl synchronisiert sind. Durch die erfindungsgemäße Anordnung, mit last- oder teillastschaltbaren Schaltelementen zur Schaltung der Losräder der Radsätze, lassen sich die erforderlichen Schaltzeiten jedoch vorteilhaft verringern, da über solche Schalthilfen bereits bei geringen Drehzahldifferenzen zwischen An- und Abtrieb ohne erhöhten Verschleiß und Komforteinbußen Ein- und/oder Ausrückvorgänge eingeleitet bzw. durchgeführt werden können.

Insbesondere kann vorgesehen sein, dass mindestens eine Lastschalteinrichtung mindestens eine Reibungskupplung aufweist und/oder dass mindestens eine Lastschalteinrichtung mindestens eine Lastschaltklaue aufweist. Als Kupplungselemente können beispielsweise einfache ansteuerbare Einscheibenelemente bzw. Klauen mit geeigneten Reibflächen zum Einsatz kommen.

Ist an nur einem Radsatz eine derartige Lastschalteinrichtung angeordnet, so verkürzen sich diejenigen Schaltvorgänge, bei denen dieser Radsatz beteiligt ist. Daher ist es sinnvoll, möglichst an allen Radsätzen des Hauptgetriebes und des Splittergetriebes Lastschalteinrichtungen anzuordnen, so dass alle relevanten Schaltvorgänge entsprechend verkürzt werden können.

Bei einer besonders vorteilhaften Lastschalteinrichtung sind axial zwischen den beiden Gangkonstanten der Splittergruppe zwei diametral gegenüberliegende Reibungskupplungen angeordnet, wobei die beiden Reibungskupplungen ein gemeinsames, mit der Getriebeeingangswelle drehfest verbundenes Eingangsteil und jeweils ein mit einem Losrad der motornahen Gangkonstanten und einem Losrad der motorfernen Gangkonstanten verbundenes Ausgangteil aufweisen, so dass über die Reibungskupplungen eine Antriebsverbindung zwischen der Getriebeeingangswelle und der mindestens einen Vorgelegewelle zumindest unter Teillast schaltbar ist, bei der wenigstens eine drehfeste Verbindung eines Losrades mit der Getriebeeingangswelle hergestellt oder gelöst wird. Eine derartige Lastschalteinrichtung ersetzt beispielsweise eine übliche synchronisierte Schalteinrichtung, d.h. eine beidseitige Synchronkupplung der Splittergruppe.

Weiterhin kann axial zwischen der motorfernen Gangkonstanten der Splittergruppe und einem Hauptgetriebegang eine Lastschalteinrichtung mit zwei diametral gegenüberliegenden Reibungskupplungen angeordnet sein, wobei die beiden Reibungskupplungen ein gemeinsames, mit der Hauptgruppenausgangswelle drehfest verbundenes Ausgangsteil und jeweils ein mit einem Losrad der motorfernen Gangkonstanten und einem Losrad des Hauptgetriebegangs verbundenes Eingangsteil aufweisen, so dass über die Reibungskupplungen eine Abtriebsverbindung zwischen der mindestens einen Vorgelegewelle und der Hauptgruppenausgangswelle zumindest unter Teillast schaltbar ist, bei der wenigstens eine drehfeste Verbindung eines Losrades mit der Hauptgruppenausgangswelle hergestellt oder gelöst wird. Eine derartige Lastschalteinrichtung ersetzt beispielsweise eine übliche unsynchronisierte Klauen-Schalteinrichtung der Hauptgruppe.

Die beidseitig schaltbaren Lastschalteinrichtungen sind besonders kompakt bauend und Gewicht sparend, Selbstverständlich können aber auch, insbesondere bei einer ungeraden Anzahl von Vorwärtsgang-Radsätzen im Hauptgetriebe, an einem oder mehreren Hauptgetriebegängen oder auch an Gangkonstanten der Splittergruppe Lastschalteinrichtungen mit nur einer Reibungskupplung, also einseitig schaltbare Lastschalteinrichtungen, angeordnet sein.

In analoger Weise kann vorgesehen sein, dass axial zwischen den beiden Gangkonstanten der Splittergruppe eine Lastschalteinrichtung mit einer zweiseitig wechselweise wirksamen, mit der Getriebeeingangswelle drehfest verbundenen Lastschaltklaue angeordnet ist, so dass über die Lastschaltklaue eine Antriebsverbindung zwischen der Getriebeeingangswelle und der mindestens einen Vorgelegewelle zumindest unter Teillast schaltbar ist, bei der wenigstens eine drehfeste Verbindung eines Losrades der motornahen Gangkonstanten oder eines Losrades der motorfernen Gangkonstanten mit der Getriebeeingangswelle hergestellt oder gelöst wird.

Bei einer axial zwischen der motorfernen Gangkonstanten der Splittergruppe und einem Hauptgetriebegang angeordneten Lastschalteinrichtung mit einer zweiseitig wechselweise wirksamen, mit der Hauptgruppenausgangswelle drehfest verbundenen Lastschaltklaue ist entsprechend eine Abtriebsverbindung zwischen der mindestens einen Vorgelegewelle und der Hauptgruppenausgangswelle zumindest unter Teillast schaltbar, bei der wenigstens eine drehfeste Verbindung eines Losrades der motorfernen Gangkonstanten oder eines Losrades des Hauptgetriebeganges mit der Hauptgruppenausgangswelle hergestellt oder gelöst wird. Schließlich können selbstverständlich auch Lastschalteinrichtungen mit einseitig lastschaltbaren Lastschaltklauen im Hauptgetriebe oder im Splittergetriebe vorgesehen sein.

Zur Verdeutlichung der Erfindung ist der Beschreibung eine Zeichnung mit zwei Ausführungsbeispielen beigefügt. In dieser zeigt
Fig. 1 ein Getriebeschema eines automatisierten Mehrgruppengetriebes eines Kraftfahrzeuges mit einer in einer Bereichsgruppe integrierten Zwischengangkupplung und mit herkömmlichen, nicht lastschaltbaren Gangschalteinrichtungen,
Fig. 2 ein Getriebeschema eines automatisierten Mehrgruppengetriebes eines Kraftfahrzeuges mit einer in einer Bereichsgruppe integrierten Zwischengangkupplung sowie mit erfindungsgemäßen, lastschaltbaren Gangschalteinrichtungen, und
Fig. 3 eine zweite Ausführungsform eines Getriebeschemas eines automatisierten Mehrgruppengetriebes eines Kraftfahrzeuges mit einer in einer Bereichsgruppe integrierten Zwischengangkupplung sowie mit erfindungsgemäßen, lastschaltbaren Gangschalteinrichtungen.

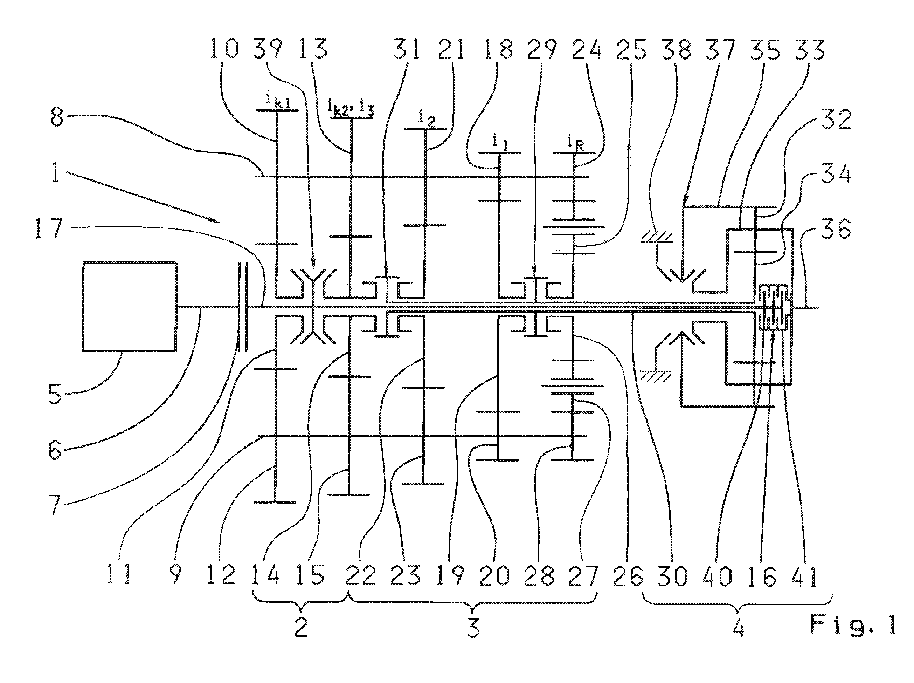

Die Fig. 1 zeigt demnach ein als Zwei-Vorgelegewellen-Getriebe 1 ausgebildetes automatisiertes Mehrgruppengetriebe mit zwei parallelen, drehbar gelagerten Vorgelegewellen 8, 9 und drei hintereinander angeordneten Getriebegruppen 2, 3 und 4, wie es beispielsweise im Antriebsstrang eines Nutzfahrzeuges vorgesehen sein kann. Am Getriebeabtrieb ist ein Lastschaltmittel 16 zum Schalten eines Zwischenganges angeordnet. Ein derartiges Getriebe, bei dem eine Zwischengangkupplung jedoch zwischen einer Eingangsgruppe und einer Hauptgruppe oder zwischen einer Anfahrkupplung und einer Eingangsgruppe angeordnet ist, ist an sich aus der eingangs erwähnten DE 10 2006 024 370 A1 der Anmelderin bekannt. Ein vergleichbares Gruppengetriebe mit einer am Getriebeabtrieb angeordneten Zwischengangkupplung, jedoch mit nur einer Vorgelegewelle, ist aus der ebenfalls bereits erwähnten DE 10 2005 046 894 A1 der Anmelderin bekannt. Die Erfindung bezieht sich daher im Wesentlichen auf Lastschalteinrichtungen 42, 48, 54 und 59, 61, 63 zur Unterstützung der Zwischengangkupplung 16 bei einem Gangwechsel.

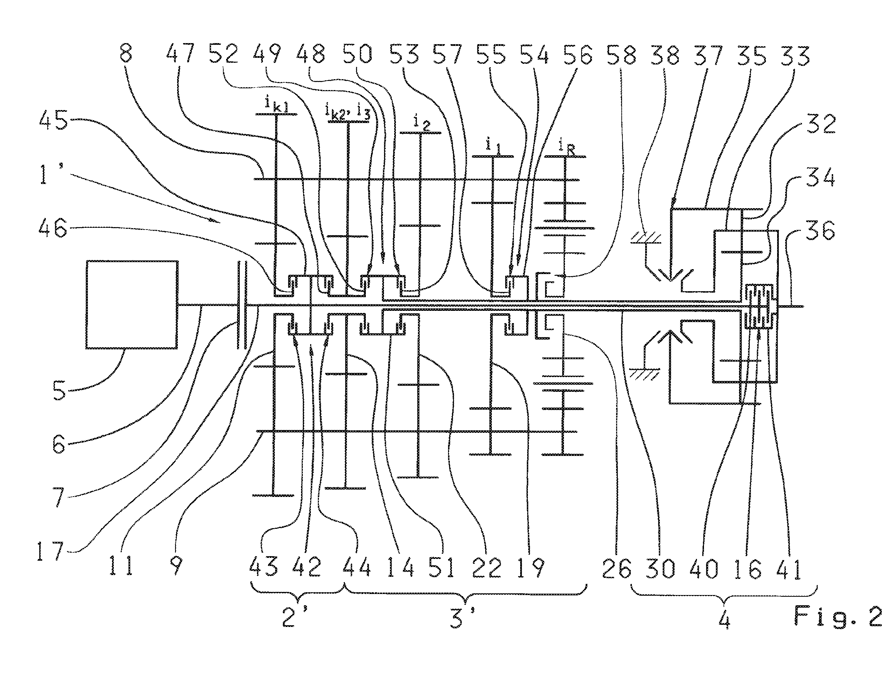

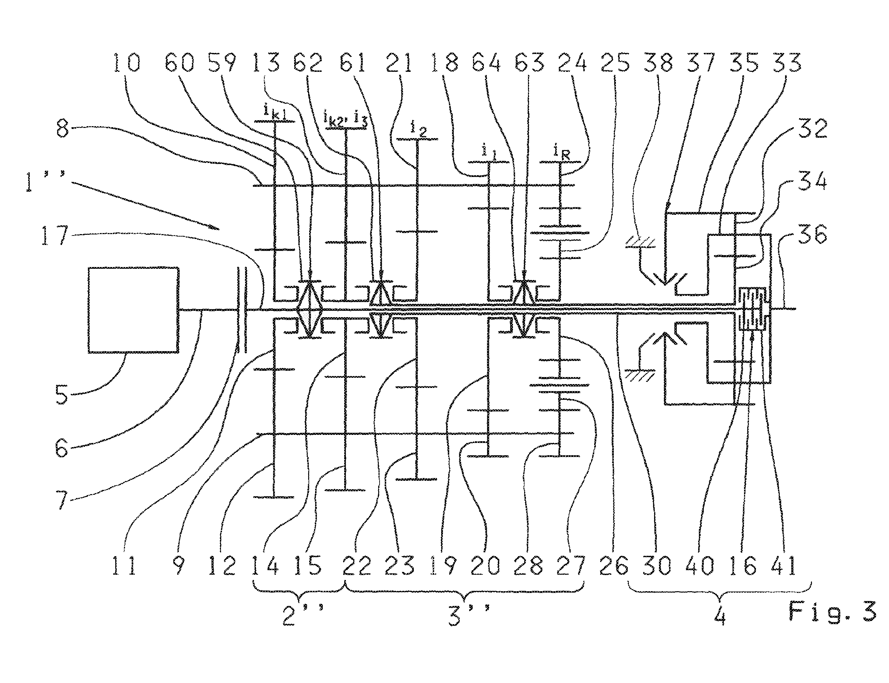

Zur Verdeutlichung der Erfindung wird im Folgenden das Getriebeschema in Fig. 1 zunächst mit herkömmlichen, nicht lastschaltbaren Schalteinrichtungen 29, 31, 39 und anschließend in Fig. 2 und Fig. 3 mit lastschaltbaren Schalteinrichtungen 42, 48, 54 und 59, 61, 63 zum Schalten der Gänge beschrieben.

Eine Antriebswelle 6 eines Antriebsmotors 5 ist über ein herkömmliches Anfahrelement 7 in Form beispielsweise einer Reibungskupplung mit einer Getriebeeingangswelle 17 verbindbar. Die erste, eingangsseitige Getriebegruppe 2 ist als ein zweigängiges Splittergetriebe ausgebildet. Die zweite, zentrale Getriebegruppe 3 wird durch ein dreigängiges Haupt- oder Grundgetriebe gebildet. Als dritte, abtriebsseitige Getriebegruppe 4 ist ein nachgeschaltetes zweigängiges Bereichsgetriebe angeordnet.

Das Splittergetriebe 2 weist zwei Gangkonstanten iₖ₁, iₖ₂ auf, die jeweils ein auf der ersten Vorgelegewelle 8 und auf der zweiten Vorgelegewelle 9 drehfest angeordnetes Festrad 10, 12 bzw. 13, 15 umfassen, die mit einem Losrad 11 bzw. 14 kämmen. Die erste Gangkonstante iₖ₁ ist dem Anfahrelement 7 und die zweite Gangkonstante iₖ₂ dem Hauptgetriebe 3 zugewandt. Zur Schaltung der Gangkonstanten iₖ₁, iₖ₂ ist eine Schalteinrichtung 39, vorteilhaft mit Synchronisierung, angeordnet, über welche die Losräder 11 bzw. 14 wahlweise drehfest mit der Getriebeeingangswelle 17 verbindbar sind.

Das Hauptgetriebe 3 weist drei Vorwärtsgangradsätze i₁, i₂ und i₃ sowie einen Rückwärtsgangradsatz i_{R} auf. Der 1. Hauptgetriebegang i₁ und der 2. Hauptgetriebegang i₂ umfassen jeweils zwei Festräder 18, 20 bzw. 21, 23 und ein Losrad 19 bzw. 22. Der 3. Hauptgetriebegang i₃ ist gemeinsam mit der zweiten Gangkonstante iₖ₂ des Splittergetriebes 2 realisiert. Der Rückwärtsgang-Radsatz i_{R} umfasst zwei Festräder 24, 28, ein Losrad 26 und zwei drehbar gelagerte Zwischenräder 25, 27 zur Drehrichtungsumkehr, die einerseits mit dem jeweils zugehörigen Festrad 24 bzw. 28 und andererseits mit dem Losrad 26 kämmen.

Zur Schaltung des 1. Hauptgetriebeganges i₁ und des Rückwärtsgang-Radsatzes i_{R} ist die unsynchronisierte Klauen-Schalteinrichtung 29 vorgesehen, über welche die zugehörigen Losräder 19 bzw. 26 wahlweise drehfest mit einer als Hohlwelle ausgebildeten Hauptgruppenausgangswelle 30 verbindbar sind.

Zur Schaltung des 2. Hauptgetriebeganges i₂ und des 3. Hauptgetriebeganges i₃ ist weiterhin die unsynchronisierte Klauen-Schalteinrichtung 31 angeordnet, über welche die zugehörigen Losräder 22 bzw. 14 wahlweise drehfest mit der Hauptgruppenausgangswelle 30 verbindbar sind. Die Gänge i₁, i₂, i₃, i_{R} des Hauptgetriebes 3 übertragen den Leistungsfluss von den Vorgelegewellen 8, 9 auf die Hauptgruppenausgangswelle 30 und von dieser weiter in Richtung Getriebeabtrieb. Da der 3. Hauptgetriebegang i₃ und die zweite Gangkonstante iₖ₂ den selben Radsatz iₖ₂ - i₃ nutzen, ist folglich das Losrad 14 dieses Radsatzes iₖ₂/i₃ über die Schalteinrichtung 39 der Vorschaltgruppe 2 antriebsseitig mit der Getriebeeingangswelle 17 und über die Schalteinrichtung 31 der Hautgruppe 3 abtriebsseitig mit der Hauptgruppenausgangswelle 30 verbindbar.

Das nachgeschaltete Bereichsgetriebe 4 ist als ein Planetengetriebe ausgebildet. Darin ist ein Planetenradsatz 32 von einem Planetenradträger 33 geführt. Die nicht explizit dargestellten Planetenräder kämmen einerseits mit einem zentralen Sonnenrad 34 und andererseits mit einem äußeren Hohlrad 35. Das Sonnenrad 34 ist mit der Hauptgruppenausgangswelle 30 verbunden. Der Planetenradträger 33 ist wiederum mit einer Getriebeabtriebswelle 36 verbunden.

Zur Schaltung des Bereichsgetriebes 4 ist eine Schalteinrichtung 37, vorteilhaft mit Synchronisierung, angeordnet. Diese Schalteinrichtung 37 verbindet in einer ersten Schaltstellung das Hohlrad 35 mit einem Gehäuse 38, so dass die Planetenräder zwischen Hohlrad 35 und Sonnenrad 34 umlaufen und die Getriebeabtriebswelle 36, entsprechend einer Übersetzung des Planetengetriebes, über den Planetenradträger 33 gleichsinnig mit der Hauptgruppenausgangswelle 30 angetrieben wird. In einer zweiten Schaltstellung wird das Hohlrad 35 mit dem Planetenradträger 33 verblockt, so dass das Planetengetriebe 4 und damit die Getriebeabtriebswelle 36 direkt mit der Drehzahl der Hauptgruppenausgangswelle 30 rotiert.

Zwischen dem Sonnenrad 34 und der Getriebeabtriebswelle 36 ist die als Reibungskupplung ausgebildete Zwischengangkupplung 16 positioniert. Ein inneres Eingangsteil 40 der Zwischengangkupplung 16 ist mit dem Ende der verlängerten Getriebeeingangswelle 17 verbunden. Ein äußeres, topfartiges Ausgangsteil 41 ist stirnseitig mit dem Planetenträger 33 und damit mit der Getriebeabtriebswelle 36 verbunden. Über übliche eingangsseitige und ausgangsseitige zusammenwirkende Reibflächen ist eine reibschlüssige Direktverbindung zwischen Antrieb, also Getriebeeingangswelle 17 und Abtrieb, das heißt der Getriebeabtriebswelle 36, herstellbar, wobei die Zwischengangkupplung 16 über eine nicht dargestellte Kupplungs- und Getriebesteuerung für einen Schlupfbetrieb ansteuerbar ist.

Aus der Kombination der Getriebegruppen 2, 3 und 4 des dargestellten Getriebeschemas 1 ergeben sich insgesamt 2 x 3 x 2 = 12 Gänge. Der Kraftfluss des Getriebes 1 verzweigt sich nach einer Schaltfolge, bei der, beginnend mit dem 1. Gang im Hauptgetriebe 3, zunächst alternierend das Splittergetriebe 2 und das Hauptgetriebe 3 durchgeschaltet werden, so dass nacheinander 2 x 3 = 6 Gänge eines unteren Gangbereichs "1. Gang bis 6. Gang" geschaltet werden. Ist der 6. Gang erreicht, schaltet das Bereichsgetriebe 4 um, und es werden erneut das Hauptgetriebe 3 und das Splittergetriebe 2 alternierend durchgeschaltet, so dass wiederum 2 x 3 = 6 Gänge, nun aber in einem oberer Gangbereich "7. Gang bis 12. Gang", geschaltet werden. Weiterhin stehen durch Umschalten der Gangkonstanten iₖ₁, iₖ₂ des Splittergetriebes 2 wahlweise zwei Rückwärtsgangübersetzungen zur Verfügung.

Bei der beschriebenen Schaltabfolge ist im 6. Gang bzw. im 12. Gang die Getriebeeingangswelle 17 über die geschlossene zweite Gangkonstante iₖ₂ und den geschossenen 3. Hauptgetriebegang i₃ mit der Hauptgruppenausgangswelle 30 verbunden, die Getriebeübersetzung ist also im 6. Gang i = 1 zuzüglich der Bereichsgetriebeübersetzung und im 12. Gang i = 1 einschließlich Bereichsgetriebeübersetzung. Bei einer Auslegung des 11. und 12. Ganges als Schnellgänge mit einer Übersetzung i < 1 könnte jedoch die Schaltabfolge auch so geändert werden, dass bereits der 10. Gang diese Schaltstellung einnimmt, also der Direktgang ist.

Die Direktübersetzung i = 1 entspricht auch dem Zwischengang. Zur Schaltung des als Direktgang ausgelegten Zwischengangs ist, wie bereits erläutert, die verlängerte Getriebeeingangswelle 17 über die Zwischengangkupplung 16 direkt mit der Getriebeabtriebswelle 36 verbindbar, wobei der reibschlüssige Direktgang, im Gegensatz zum obigen formschlüssigen Direktgang, über die Zwischengangkupplung 16 im Schlupf steuerbar ist.

Die Fig. 2 zeigt ein vergleichbares Getriebeschema 1' mit einer Splittergruppe 2' und einer Hauptgruppe 3', die anstelle der herkömmlichen Schalteinrichtungen 29, 31, 39 lastschaltbare Schalteinrichtungen 42, 48, 54 zum Schalten der Vorwärtsgang-Radsätze i₁, i₂, i₃, iₖ₁, iₖ₂ aufweisen. Die Lastschalteinrichtung 42 der Splittergruppe 2' umfasst zwei koaxiale Reibungskupplungen 43 und 44, wobei ein gemeinsames äußeres Eingangsteil 45 mit der Getriebeeingangswelle 17 verbunden ist. Das Eingangsteil 45 umgreift ein mit dem Losrad 11 der motornahen Gangkonstante iₖ₁ verbundenes Ausgangsteil 46 sowie ein mit dem Losrad 14 der motorfernen Gangkonstanten iₖ₂ verbundenes gegenüberliegendes Ausgangsteil 47. Die Reibungskupplungen 43 und 44 sind derart ansteuerbar, dass ein Umschalten der Gangkonstanten iₖ₁, iₖ₂ bis zu einer vorgegebenen maximal zulässigen Drehzahldifferenz zwischen der Eingangsseite und der Ausgangseite, also unter Teillast möglich ist.

Zwischen dem 3. Hauptgetriebegang i₃ und dem 2. Hauptgetriebegang i₂ ist eine weitgehend baugleiche weitere Schalteinrichtung 48 angeordnet, wobei Eingangsseite und Ausgangsseite im Vergleich zur Lastschalteinrichtung 42 vertauscht sind. Die Lastschalteinrichtung 48 der Hauptgruppe 3' umfasst zwei koaxiale Reibungskupplungen 49 und 50, wobei ein gemeinsames äußeres Ausgangsteil 51 mit der Hauptgruppenausgangswelle 30 verbunden ist. Das Ausgangsteil 51 umgreift ein mit dem Losrad 14 des 3. Hauptgetriebeganges i₃ bzw. der Gangkonstanten iₖ₂ verbundenes Eingangsteil 52 und ein mit dem Losrad 22 des 2. Hauptgetriebeganges i₂ verbundenes gegenüberliegendes Eingangsteil 53. Diese Lastschalteinrichtung 48 erlaubt Schaltvorgänge der zugeordneten Radsätze i₂ und i₃ unter Teillast. Dem 1. Hauptgetriebegang i₁ ist eine dritte Lastschalteinrichtung 54 zugeordnet. Diese Lastschalteinrichtung 54 umfasst eine Reibungskupplung 55, wobei ein äußeres Ausgangsteil 56 mit der Hauptgruppenausgangswelle 30 und ein inneres Eingangsteil 57 mit dem Losrad 19 des Ganges i₁ verbunden ist. Schließlich ist für den Rückwärtsgang i_{R} eine herkömmliche Klauenschalteinrichtung 58 vorgesehen.

Ein weiteres Getriebeschema 1" zeigt Fig. 3. Darin sind in einer Splittergruppe 2" und in einer Hauptgruppe 3" Lastschalteinrichtungen 59, 61, 63 mit nicht näher beschriebenen Lastschaltklauen 60, 62, 64 angeordnet. Die beiden ersten Lastschaltklauen 60, 62 sind zweiseitig wechselweise wirksam, wobei jeweils eine Lastschaltklaue 60, 62 in vergleichbarer Weise die Funktionen zweier Reibungskupplungen 43, 44 bzw. 49, 50 aus Fig. 2 erfüllt. Für den 1. Hauptgetriebegang i₁ und den Rückwärtsgang i_{R} ist eine Lastschaltklaueneinrichtung 63 vorgesehen, deren Lastschaltklaue 64 ebenfalls beidseitig lastschaltbar ist. Diese Lastschaltklaue 64 kann jedoch auch auf der Seite des Rückwärtsganges i_{R} als einfache Schaltklaue ausgebildet sein.

Ein erfindungsgemäßes Verfahren zum Betrieb eines Mehrgruppengetriebes, wie es in Fig. 2 oder Fig. 3 dargestellt und oben beschrieben ist, beruht im Wesentlichen darauf, dass bei einem Gangwechsel zur Zugkrafterhaltung bei geschlossenem Anfahrelement 7 über eine Zwischengangkupplung 16 ein Zwischengang geschaltet wird, wobei mit Hilfe last- oder teillastschaltbarer Schalteinrichtungen 42, 48, 54 bzw. 59, 61, 63 an den Radsätzen i₁, i₂, i₃, iₖ₁, iₖ₂ verringerte Schaltzeiten erreicht werden und somit der Gangwechsel zeitlich verkürzt wird.

Bei einer durch den Fahrer oder eine Getriebesteuerung initiierten Schaltanforderung wird über die Zwischengangkupplung 16 der Zwischengang zugeschaltet, d.h. eine Direktverbindung zwischen der Getriebeeingangswelle 17 und der Getriebeabtriebswelle 36 hergestellt. Das Hauptgetriebe 3', 3" wird in der Folge der Abstützung des Motormomentes am Abtrieb entlastet und somit schaltbar. Während die Motordrehzahl im Schlupfbetrieb der Zwischengangkupplung 16 dem angeforderten Zielgang angenähert wird, kann bereits vor Erreichen einer vollständigen Drehzahlgleichheit der korrespondierenden Wellen der Gangwechsel durchgeführt, d.h. über die entsprechenden Lastschalteinrichtungen 42, 48, 54 bzw. 59, 61, 63 der Ursprungsgang gelöst und der Zielgang eingerückt werden. Das Anfahrelement 7 bleibt während des gesamten Schaltvorgangs geschlossen. Zum Abschluss des Gangwechsels wird der Zwischengang wieder gelöst. Je nach Schaltvorgang oder Gangsprung kann der zugkraftunterstützte Gangwechsel alternativ oder zusätzlich eine Umschaltung der Gangkonstanten iₖ₁, iₖ₂ des Splittergetriebes 2', 2", ebenfalls mit Lastschaltunterstützung, und/oder eine Gangbereichsumschaltung des Bereichsgetriebes 4 beinhalten.

### Bezugszeichenliste

- 1, 1', 1": Zwei-Vorgelegewellen-Getriebe
- 2, 2', 2": Splittergruppe, Splittergetriebe
- 3, 3', 3": Hauptgruppe, Hauptgetriebe
- 4: Bereichsgruppe, Bereichsgetriebe
- 5: Antriebsmotor
- 6: Antriebswelle
- 7: Anfahrelement
- 8: Vorgelegewelle
- 9: Vorgelegewelle
- 10: Festrad
- 11: Losrad
- 12: Festrad
- 13: Festrad
- 14: Losrad
- 15: Festrad
- 16: Lastschaltmittel
- 17: Getriebeeingangswelle
- 18: Festrad
- 19: Losrad
- 20: Festrad
- 21: Festrad
- 22: Losrad
- 23: Festrad
- 24: Festrad
- 25: Zwischenrad
- 26: Losrad
- 27: Zwischenrad
- 28: Festrad
- 29: Schalteinrichtung
- 30: Hauptgruppenausgangswelle
- 31: Schalteinrichtung
- 32: Planetenradsatz
- 33: Planetenradträger
- 34: Sonnenrad
- 35: Hohlrad
- 36: Getriebeabtriebswelle
- 37: Schalteinrichtung
- 38: Gehäuse
- 39: Schalteinrichtung
- 40: Kupplungseingangsteil
- 41: Kupplungsausgangsteil
- 42: Lastschalteinrichtung
- 43: Lastschaltreibungskupplung
- 44: Lastschaltreibungskupplung
- 45: Lastschaltkupplungseingangsteil
- 46: Lastschaltkupplungsausgangsteil
- 47: Lastschaltkupplungsausgangsteil
- 48: Lastschalteinrichlung
- 49: Lastschaltreibungskupplung
- 50: Lastschaltreibungskupplung
- 51: Lastschaltkupplungsausgangsteil
- 52: Lastschaltkupplungseingangsteil
- 53: Lastschaltkupplungseingangsteil
- 54: Lastschalteinrichtung
- 55: Lastschaltreibungskupplung
- 56: Lastschaltkupplungsausgangsteil
- 57: Lastschaltkupplungseingangsteil
- 58: Klauenschalteinrichtung
- 59: Lastschalteinrichtung
- 60: Lastschaltklaue
- 61: Lastschalteinrichtung
- 62: Lastschaltklaue
- 63: Lastschalteinrichtung
- 64: Lastschaltklaue

- iₖ₁: Splittergetriebe-Gangkonstante
- iₖ₂: Splittergetriebe-Gangkonstante
- i₁: Hauptgetriebe-Gang
- i₂: Hauptgetriebe-Gang
- i₃: Hauptgetriebe-Gang
- i_{R}: Hauptgetriebe-Rückwärtsgang

## Patentansprüche

1. Mehrgruppengetriebe eines Kraftfahrzeuges, mit mindestens zwei Getriebegruppen (3', 3", 4), wobei eine als Planetengetriebe ausgebildete Bereichsgruppe (4) einer als Zahnradgetriebe ausgebildeten Hauptgruppe (3', 3") nachgeschaltet ist, wobei eine Hauptgruppenausgangswelle (30) mit einem Sonnenrad (34) und eine Getriebeabtriebswelle (36) mit einem Planetenträger (33) der Bereichsgruppe (4) verbunden ist, mit einem Anfahrelement (7), über das ein Antriebsmotor (5) mit einer Getriebeeingangswelle (17) verbindbar ist, und mit einem in die Bereichsgruppe (4) integrierten, als Reibungskupplung ausgebildeten Lastschaltmittel (16) zum Schalten eines zugkraftunterstützenden Direktgangs als Zwischengang bei einem Gangwechsel, über das die Getriebeeingangswelle (17) mit der Getriebeabtriebswelle (36) verbindbar ist, wobei ein Eingangsteil (40) des Lastschaltmittels (16) mit der Getriebeeingangswelle (17) und ein Ausgangsteil (41) des Lastschaltmittels (16) mit dem Planetenträger (33) verbunden ist, **dadurch gekennzeichnet, dass** zusätzlich zu dem Lastschaltmittel (16) zum Schalten eines Zwischenganges mindestens eine Lastschalteinrichtung (42, 48, 54, 59, 61, 63) zum Schalten mindestens eines Ganges (i₁, i₂, i₃) der Hauptgruppe (3', 3") und/oder mindestens einer der Hauptgruppe (3', 3") vorgeschalteten Gangkonstanten (iₖ₁, iₖ₂) vorgesehen ist, die Schaltvorgänge zumindest unter Teillast erlaubt.

2. Mehrgruppengetriebe nach Anspruch 1, **dadurch gekennzeichnet, dass** mindestens eine Lastschalteinrichtung (42, 48, 54) wenigstens eine Reibungskupplung (43, 44, 49, 50, 55) aufweist.

3. Mehrgruppengetriebe nach Anspruch 1 oder 2, **dadurch gekennzeichnet, dass** mindestens eine Schalteinrichtung (59, 61, 63) wenigstens eine Lastschaltklaue (60, 62, 64) aufweist.

4. Mehrgruppengetriebe nach einem der Ansprüche 1 bis 3, **dadurch gekennzeichnet, dass** die Hauptgruppenausgangswelle (30) als eine Hohlwelle ausgebildet ist, durch die die Getriebeeingangswelle (17) koaxial hindurchgeführt ist.

5. Mehrgruppengetriebe nach einem der Ansprüche 1 bis 4, **dadurch gekennzeichnet, dass** eine zwei Gangkonstanten (iₖ₁, iₖ₂) aufweisende getriebeeingangsseitige Splittergruppe (2', 2"), eine mindestens drei Gangstufen (i₁, i₂, i₃) aufweisende zentrale Hauptgruppe (3', 3") und eine zwei Gangbereiche aufweisende getriebeausgangsseitige Bereichsgruppe (4) im Kraftfluss hintereinander angeordnet sind, wobei die Splittergruppe (2', 2") und die Hauptgruppe (3', 3") als Vorgelegewellengetriebe mit mindestens einer gemeinsamen Vorgelegewelle (8, 9) ausgebildet sind, und wobei jeweils ein koaxial zur Getriebeeingangswelle (17) gelagertes Losrad (11, 14, 19, 22) mit einem auf der mindestens einen parallel zur Getriebeeingangswelle (17) gelagerten Vorgelegewelle (8, 9) sitzenden Festrad (10, 12, 13, 15 18, 20, 21, 23) im Eingriff ist.

6. Mehrgruppengetriebe nach einem der Ansprüche 1 bis 5, **dadurch gekennzeichnet, dass** axial zwischen den beiden Gangkonstanten (iₖ₁, iₖ₂) der Splittergruppe (2') eine Lastschalteinrichtung (42) mit zwei diametral gegenüberliegenden Reibungskupplungen (43, 44) angeordnet ist, wobei die beiden Reibungskupplungen (43, 44) ein gemeinsames, mit der Getriebeeingangswelle (17) drehfest verbundenes Eingangsteil (45) und jeweils ein mit einem Losrad (11) der motornahen Gangkonstanten (iₖ₁) und einem Losrad (14) der motorfernen Gangkonstanten (iₖ₂) verbundenes Ausgangteil (46, 47) aufweisen, so dass über die Reibungskupplungen (43, 44) eine Antriebsverbindung zwischen der Getriebeeingangswelle (17) und der mindestens einen Vorgelegewelle (8, 9) zumindest unter Teillast schaltbar ist, bei der wenigstens eine drehfeste Verbindung eines Losrades (11, 14) mit der Getriebeeingangswelle (17) hergestellt oder gelöst wird.

7. Mehrgrupperigetriebe nach einem der Ansprüche 1 bis 6, **dadurch gekennzeichnet, dass** axial zwischen der motorfernen Gangkonstanten (iₖ₂) der Splittergruppe (2') und einem Hauptgetriebegang (i₂) eine Lastschalteinrichtung (48) mit zwei diametral gegenüberliegenden Reibungskupplungen (49, 50) angeordnet ist, wobei die beiden Reibungskupplungen (49, 50) ein gemeinsames, mit der Hauptgruppenausgangsweile (30) drehfest verbundenes Ausgangsteil (51) und jeweils ein mit einem Losrad (14) der motorfernen Gangkonstanten (iₖ₂) und einem Losrad (22) des Hauptgetriebegangs (i₂) verbundenes Eingangsgangteil (52, 53) aufweisen, so dass über die Reibungskupplungen (49, 50) eine Abtriebsverbindung zwischen der mindestens einen Vorgelegewelle (8, 9) und der Hauptgruppenausgangswelle (30) zumindest unter Teillast schaltbar ist, bei der wenigstens eine drehfeste Verbindung eines Losrades (14, 22) mit der Hauptgruppenausgangswelle (30) hergestellt oder gelöst wird.

8. Mehrgruppengetriebe nach einem der Ansprüche 1 bis 7, **dadurch gekennzeichnet, dass** wenigstens an einem Hauptgetriebegang (i₁) eine Lastschalteinrichtung (54) mit einer Reibungskupplung (55) angeordnet ist, wobei die Reibungskupplung (55) ein mit der Hauptgruppenausgangswelle (30) drehfest verbundenes Ausgangsteil (56) und ein mit einem Losrad (19) des Hauptgetriebegangs (i₁) verbundenes Eingangsteil (57) aufweist, so dass über die Reibungskupplung (55) eine Abtriebsverbindung zwischen der mindestens einen Vorgelegewelle (8, 9) und der Hauptgruppenausgangswelle (30) zumindest unter Teillast schaltbar ist, bei der eine drehfeste Verbindung des Losrades (19) mit der Hauptgruppenausgangswelle (30) hergestellt oder gelöst wird.

9. Mehrgruppengetriebe nach einem der Ansprüche 1 bis 8, **dadurch gekennzeichnet, dass** axial zwischen den beiden Gangkonstanten (iₖ₁, iₖ₂) der Splittergruppe (2") eine Lastschalteinrichtung (59) mit einer zweiseitig wechselweise wirksamen, mit der Getriebeeingangswelle (17) drehfest verbundenen Lastschaltklaue (60) angeordnet ist, so dass über die Lastschaltklaue (60) eine Antriebsverbindung zwischen der Getriebeeingangswelle (17) und der mindestens einen Vorgelegewelle (8, 9) zumindest unter Teillast schaltbar ist, bei der wenigstens eine drehfeste Verbindung eines Losrades (11) der motornahen Gangkonstanten (iₖ₁) oder eines Losrades (14) der motorfernen Gangkonstanten (iₖ₂) mit der Getriebeeingangswelle (17) hergestellt oder gelöst wird.

10. Mehrgruppengetriebe nach einem der Ansprüche 1 bis 9, **dadurch gekennzeichnet, dass** axial zwischen der motorfernen Gangkonstanten (iₖ₂) der Splittergruppe (2") und einem Hauptgetriebegang (i₂) eine Lastschalteinrichtung (61) mit einer zweiseitig wechselweise wirksamen, mit der Hauptgruppenausgangswelle (30) drehfest verbundenen Lastschaltklaue (62) angeordnet ist, so dass über die Lastschaltklaue (62) eine Abtriebsverbindung zwischen der mindestens einen Vorgelegewelle (8, 9) und der Hauptgruppenausgangswelle (30) zumindest unter Teillast schaltbar ist, bei der wenigstens eine drehfeste Verbindung eines Losrades (14) der motorfernen Gangkonstanten (iₖ₂) oder eines Losrades (22) des Hauptgetriebeganges (i₂) mit der Hauptgruppenausgangswelle (30) hergestellt oder gelöst wird.

11. Mehrgruppengetriebe nach einem der Ansprüche 1 bis 10, **dadurch gekennzeichnet, dass** wenigstens an einem Hauptgetriebegang (i₁) eine Lastschalteinrichtung (63) mit einer mit der Hauptgruppenausgangswelle (30) drehfest verbundenen, zumindest einseitig lastschaltbaren Lastschaltklaue (64) angeordnet ist, so dass über die Lastschaltklaue (64) eine Abtriebsverbindung zwischen der mindestens einen Vorgelegewelle (8, 9) und der Hauptgruppenausgangswelle (30) zumindest unter Teillast schaltbar ist, bei der eine drehfeste Verbindung eines Losrades (19) des Hauptgetriebeganges (i₁) mit der Hauptgruppenausgangswelle (30) hergestellt oder gelöst wird.

12. Verfahren zum Betrieb eines Mehrgruppengetriebes eines Kraftfahrzeuges, bei dem bei einem Gangwechsel zugkraftunterstützende Mittel aktiviert werden, **dadurch gekennzeichnet, dass** über ein als Reibungskupplung wirksames Lastschaltmittel (16) ein Zwischengang geschaltet wird, bei dem eine Verbindung zwischen einer Getriebeeingangswelle (17) und einer Getriebeabtriebswelle (36) hergestellt wird, wobei ein Anfahrelement (7) zumindest teilweise geschlossenen ist und das Lastschaltmittel (16) im zumindest schlupfenden Zustand ein Drehmoment eines Antriebsmotors (5) an der Getriebeabtriebswelle (36) abstützt, während die Drehzahl des Antriebsmotors (5) an eine Synchrondrehzahl eines Zielganges angepasst wird, wobei mit Hilfe wenigstens einer, zumindest unter Teillast schaltbaren Lastschalteinrichtung (42, 48, 54, 59, 61, 63) zum Schalten eines Ursprungsganges und/oder eines Zielganges, bereits bei annähernd erreichter Lastfreiheit und/oder bei annähernd erreichter Synchrondrehzahl der Ursprungsgang ausgelegt und/oder der Zielgang eingelegt wird.
